# EUROPEAN PATENT APPLICATION

(11) **EP 0 622 724 A2**
(43) Date of publication of application: **02.11.1994**
(21) Application number: 94105878.6
(22) Date of filing: 15.04.1994
(51) Int. Cl.: G06F 3/033, G06F 3/16, G06K 11/16, G06K 11/18

(54) **Voice communication features in an untethered personal stylus for a digitizing display**

(30) Priority: 29.04.1993 US 54807
(71) Applicant: International Business Machines Corporation, Armonk, N.Y. 10504 (US)
(72) Inventor: Stein, Frank L., Vienna, VA 22182 (US); Verrier, Guy F., Boca Raton, FL 33486 (US); Donaldson, Robert L., Annapolis, MD 21401 (US); Schubert, Karl D., Rockville, MD 20855-2538 (US)
(74) Representative: Schäfer, Wolfgang, Dipl.-Ing.

(57) **Abstract**

An improved voice communication feature is disclosed for an untethered personal stylus used with a digitizing display in a pen-based computer system. A microphone and speaker are included in an untethered stylus in conjunction with a mechanical contact and radiative pickup mechanisms, to enable multimedia communication between the user and the pen-based computer system, through a digitizing display.

## Description

### Background of the Invention

### 1. Technical Field

The invention disclosed broadly relates to data processing systems and more particularly relates to improvements in input/output devices for pen-based computer systems.

### 2. Related Patents and Patent Applications

The following patents and patent applications are assigned to the IBM Corporation and are incorporated herein by reference.

USP 4,686,332 entitled "Combined Finger Touch and Stylus Detection System for Use on the Viewing Surface on a Visual Display Device," by Evon C. Greanias, et al.

USP 5,007,085 entitled "Remotely Sensed Personal Stylus," by Evon C. Greanias, et al.

USP 5,117,071 entitled "Stylus Sensing System," by Evon C. Greanias, et al.

Copending U. S. patent application serial number 07/778,431, filed October 16, 1991 entitled "Touch Overlay for Improved Touch Sensitivity," by Evon C. Greanias, et al.

Copending U. S. patent application serial number 07/351,227, filed May 15, 1989 entitled "Flat Touch Screen Workpad for a Data Processing System," by Gordon W. Arbeitman, et al.

Copending U. S. patent application serial number 07/969,864 filed, October 30, 1992 entitled "Architecture for Communication of Remote Devices to a Digitizing Display" by Guy F. Verrier, et al.

### 3. Background Art

Pen-based computer systems have been described in the prior art, for example in the above referenced USP 4,686,332 by Greanias, et al. In that system, a touch overlay membrane is positioned over the viewing surface of a display device such as a computer monitor, for interacting with a pickup stylus. The pickup stylus described in the '332 patent is connected by means of a wire to the pen-based computer system. The pen-based computer system generates a radiative signal in the touch overlay. The radiative signal is picked up by the stylus and sent back over the wire to the pen-based computer. The computer then calculates the relative X-Y position of the stylus with respect to the overlay. The relative proximity Z of the stylus to the overlay is determined by the signal amplitude picked up by the stylus from the electromagnetic energy radiated from the overlay. An improvement in the stylus pickup antenna is described in the above cited USP 5,117,071 by Greanias, et l. In the '071 patent, the antenna configuration in the tip of the stylus is a small sphere, whose shape enables a uniform signal strength to be picked up without regard for the relative orientation of the stylus with respect to the planar surface of the overlay. A further improvement has been made to the stylus by eliminating the cable connection between the stylus and the pen-based computer system, as is described in USP 5,007,085 by Greanias, et al. In the '085 patent, the signal detected by the stylus antenna which has been picked up from the electromagnetic radiation emitted by the overlay, is converted into a second signal which is transmitted either by infrared radiation, microwave radiation or radio frequency radiation at a different frequency, from the stylus back to an electromagnetic detector coupled to the pen-based computer system. Another improvement to pen-based computer systems is described in the above referenced copending U. S. patent application serial number 07/351,227, filed May 15, 1989 by Arbeitman, et al. In the Arbeitman, et al. patent application, a flat touch screen workpad is substituted for the combination of the computer display monitor and touch overlay membrane. In the Arbeitman, et al. patent application, the radiative pickup stylus is connected by means of a wire to the flat touch screen workpad, for receiving the electromagnetic radiation emanated from the overlay membrane, the wire transferring the detected signal from the pickup stylus back to the electronics containedin the flat touch screen workpad.

In the description of the invention contained herein, the term "digitizing display" will be used to generally refer to either the combination of a computer display monitor and touch overlay membrane described in the '085 patent or alternately, the workpad display and overlay described in the Arbeitman, et al. patent application.

The above cited USP 5,007,085 entitled "Remotely Sensed Personal Stylus," by Evon C. Greanias, et al., describes a pen-based computer system which has a digitizing display which radiates electromagnetic signals which are picked up by a remotely sensing personal stylus. The antenna in the tip of the stylus picks up the electromagnetic signals radiated from the display overlay, and converts those signals into a suitable form for retransmission back to the pen-based computer system. The relative signal strength of the signals picked up by the stylus is used to infer the relative separation distance Z of the tip of the stylus with respect to the overlay. The converted signals are transmitted back to the pen-based computer system by means of a transmitting circuit and transmitting antenna within the stylus. The technique for determining contact between the stylus tip and the surface of the overlay, is by measuring the relative signal strength of the electromagnetic signal picked up by the tip of the stylus.

A problem with this prior art is that the detection of actual touchdown of the stylus onto the workpad surface is not very sensitive. Consider in normal handwriting how the writer's hand pressure varies during the course of writing a signature. The pressure applied by the pen to the paper varies over the course of inscribing the signature on the paper and sometimes includes a slight raising of the pen from the surface of the paper. The process of writing a signature on a digitizing display by means of a radiative pickup stylus, does not faithfully reproduce the intended shape on the display screen. When the stylus is raised slightly from the surface of the digitizing display, the separation of the stylus tip from the surface will not be detected in prior art systems. What results is spurious traces and artifacts which remain in the "inked" depiction of the user's signature because the system cannot detect the actual small separation of the stylus from the surface of the digitizing display. This problem has been addressed and solved by the above cited copending patent application by Guy F. Verrier, et al. serial number 07/969,864.

Another problem with the prior art is the applications of multimedia communications to a personal untethered stylus for a digitizing display. Typically, multimedia applications include the transmission and reception of voice and other auditory communications with the user. If the user is using a digitizing display and untethered stylus, there is no provision in the prior art for accommodating voice communications at the user location.

### Objects of the Invention

It is therefore an object of the invention to provide an improved voice communications feature for an untethered personal stylus for a digitizing display.

It is another an object of the invention to reduce acoustic noise pickup by a microphone in an untethered stylus when it mechanically contacts a digitizing display in a pen-based computer system.

It is another object of the invention to provide a LAN-based acoustic communication device in a stylus for a digitizing display in a pen-based computer system.

It is a further object of the invention to provide an improved means for transferring multimedia information between a stylus and a pen-based computer system.

It is yet another object of the invention to provide a data processing system and method for communicating multimedia information between a stylus and a pen-based computer system.

### Summary of the Invention

These and other objects, features and advantages are accomplished by the architecture for communications of remote devices in a two-way digitizing display. In accordance with the invention, a stylus in a pen-based computer system includes a contact detection mechanism such as a pressure transducer which is connected through to an analog-to-digital converter to a multiplexer inside the stylus. Also connected to the multiplexer is a position detector such as a radiative pickup mechanism and signal strength detector, which provides second analog-to-digital converted bit stream to the multiplexer. The multiplexed signal which includes information relating to stylus contact and to stylus position, is then passed through a transmitter and transmitted by electromagnetic radiation to a nearby digitizing display.

In accordance with the invention, a multimedia stylus is provide for a digitising display, which can accommodate voice communications. A multiplexer included in the stylus, has inputs for microphone connection and outputs for speaker connections in the stylus. The microphone can be coupled through a switching mechanism to an input of the multiplexer, for converting input audio signals to an audio message to be transmitted to the digitizing display or to the pen-based computer system. A speaker in the stylus is coupled to an output of the multiplexer, for receiving signals transmitted from the digitizing display or from the pen-based computer system, for producing output audio signals containing an audio message.

The pen-based data processing system can send to the receiver in the stylus, signals to control the switching mechanism connecting the microphone to the transmitter in the stylus. In this manner, the microphone can be selectively coupled to the transmitter in the stylus in response to position indicating signals received by either the contact detection mechanism or alternately the radiative pickup mechanism in the stylus.

The pen-based data processing system can send signals to the receiver in the stylus representing audio messages, in response to contact detection signals or radiative pickup signals collected by the stylus when in proximity to the digitizing display. In this manner, the speaker in the stylus can produce output audio signals of audio messages which are responsive to the position detection information gathered by the stylus from either the contact detection mechanism or the radiative pickup mechanism therein. The microphone in the stylus can be selectively disconnected from the transmitter in the stylus in response to the contact detection mechanism or the radiative pickup mechanism determining that the stylus tip is in contact with the digitizing display. In this manner, acoustical noise produced by the mechanical engagement of the stylus tip with the digitizing display, need not be transmitted from the microphone to the pen-based computer system. This function can be performed either directly from the contact detection mechanism or the radiative pickup mechanism or alternately it can be performed by remote control employing signals transmitted from the pen-based computer system to the receiver in the stylus.

In one embodiment, the microphone analog output is converted into a digital output for transmission to the pen-based computer system. In another embodiment, the analog signal from the microphone can be directly transmitted back to the pen-based computer system using amplitude modulation, frequency modulation or the modulation of infrared radiation from the stylus to the pen-based computer system.

The digitizing display can be for example, a transparent overlay on a computer display monitor or a workpad, which includes an array of radiating wires embedded therein. The pattern of signals emitted by the radiating wires will be picked up by the stylus and used to infer the relative position of the stylus over the area of the overlay. In accordance with the invention, the multiplexed signal containing information about the contact of the stylus and also about the X-Y position of the stylus, is transmitted from the stylus to an antenna embedded in the digitizing display. The signal is decoded by electronics in the digitizing display, and is forwarded to the pen-based computer system. In accordance with the invention, the receiving antenna is embedded in the digitizing display and is suitable for the receipt of the multiplexed signal transmitted from the stylus.

Further in accordance with the invention, an electromagnetic signal receiver is included in the stylus capable of receiving electromagnetic signals transmitted from the antenna embedded in the digitizing display. In this manner, information originating in the pen-based computer system can be transmitted from the digitizing display through the embedded antenna to the receiver in the stylus for utilization therein.

### Description of the Drawings

These and other objects, features and advantages will be more fully appreciated with reference to the accompanying figures.
- Fig. 1: is an overall architectural diagram of the invention.
- Fig. 1B: is an architectural diagram of the pen-based computer system, showing the relationship between the personal computer 74, the tablet 22 and the stylus 20.
- Fig. 2: is a mechanical side view of an example stylus which includes the voice communications features such asthe microphone 16 and the speaker 17.
- Fig. 3A: is a schematic block diagram of a first embodiment of the invention.
- Fig. 3B: is a schematic block diagram of a second embodiment of the invention.
- Fig. 3C: is a logic block diagram of the microphone switch 19 shown in Fig. 3B.
- Fig. 4A: is a waveform diagram of the input and output to the multiplexer 36' in association with the embodiment of Fig. 3A.
- Fig. 4B: is a waveform diagram of the input and output from the multiplexer 36' in association with the second embodiment shown in Fig. 3B.
- Fig. 5: is a top view and
- Fig. 6: is a side view of the workpad 22.
- Fig. 7: is a flow diagram of a sequence of operational steps carried out in the pen-based computer system 74 as an example of the control for the stylus voice feature.

### Discussion of the Preferred Embodiment

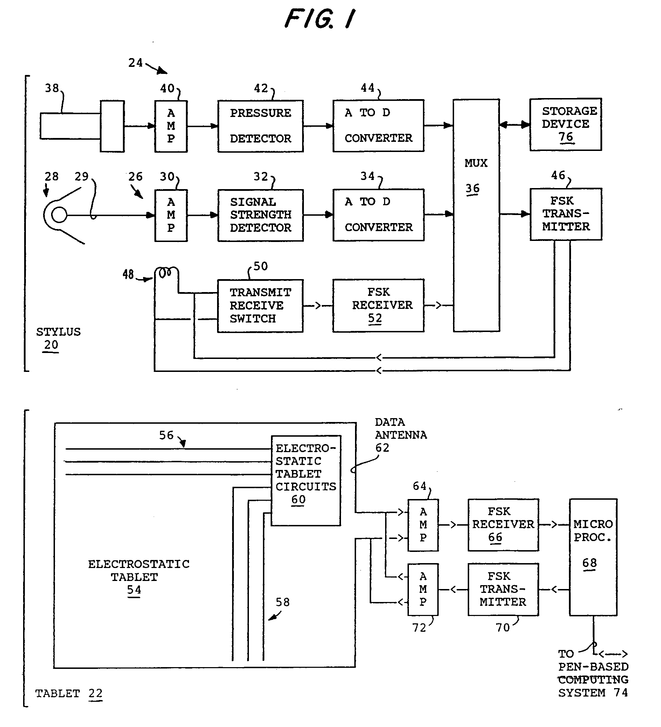

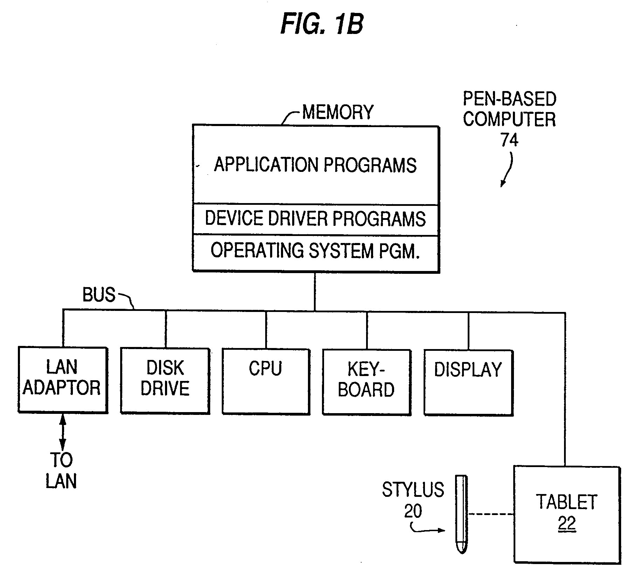

Fig. 1 is an overall architectural diagram of the architecture for communications of remote devices to a digitizing display. The digitizing display which is described herein is described in greater detail in the commonly assigned USP 5,007,085 by Greanias entitled "Remotely Sensed Personal Stylus" and USP 4,764,885 by Greanias entitled "Proximity Sensing Blinking Cursor Feature and USP 4,686,332 by Greanias entitled "Thin Plastic Overlay for Finger and Stylus Display Input."

Fig. 1B shows the pen-based computer system that includes the personal computer 74, the digitizing display or workpad tablet 22 and the stylus 20. The personal computer 74 includes a memory coupled by a system bus to a central processing unit (CPU), a keyboard, a display monitor, a disk drive bulk storage, a local area network (LAN) adapter and the tablet 22. The memory of the personal computer 74 stores an operating system program, device driver programs and application programs which are sequences of executable instructions that are executed in the CPU. The LAN adapter of the personal computer 74 connects to a local area network (LAN) that can connect the personal computer 74 to other computers and other networks. The stylus 20 communicates with the tablet 22 by means of an electromagnetic link that can be frequency modulated radio signals, amplitude modulated radio, or modulated optical or infrared radiation signals.

The architecture shown in Fig. 1 is divided in two principal parts. The first part is the stylus 20 and the second part is the digitizing display 22. The stylus 20 includes a first branch which can be for example branch 24 which is a mechanical contact detecting branch. The second branch can be for example branch 26 which is a position detecting branch.

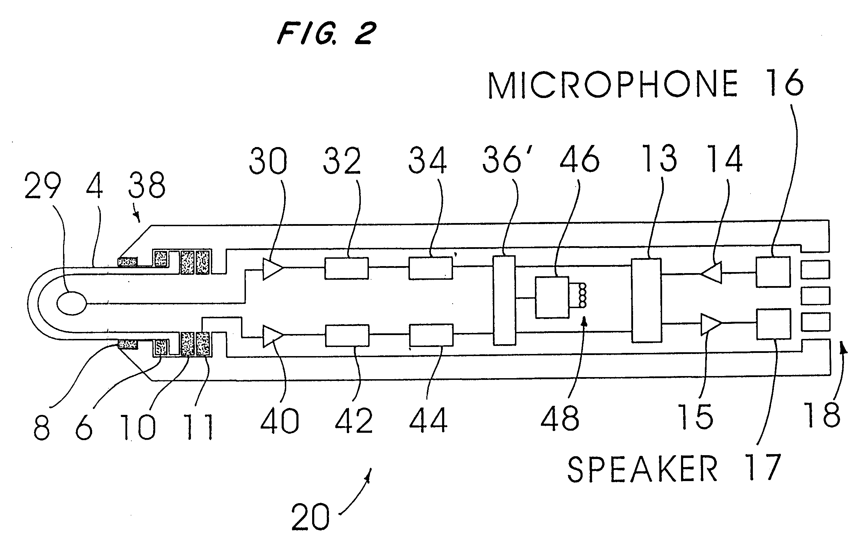

The contact detecting branch 24 can include a pressure detector 38, which is shown in greater detail in Fig. 2. Connected to the pressure detector 38 is a signal amplifier 40 which has its output connected to the pressure detector circuitry 42. The output of pressure detector circuitry 42 goes to the analog-to-digital converter 44 which outputs a digital number representing the pressure applied by the pressure detecting mechanism 38 to the front surface of the electrostatic tablet 54 in Fig. 1. The output of the analog-to-digital converter 44 is then applied to a first input of the multiplexer 36.

Fig. 2 shows the stylus 20 and in particular, shows the details of the mechanical contacting mechanism 38. A pressure transducer 10 includes a layer formed of a force sensitive resistant (FSR) transducer material, for example, as manufactured by Interlink Electronics, Santa Barbara, California. Such material changes its resistance when compressed by the application of a force on its surface. Electrically conductive electrodes on the printed circuit board 11 contact separated portions of the surface of the FSR transducer layer 10 such that a complete circuit is formed between the conductors on the printed circuit board 11, by way of the FSR transducer layer 10. The electrodes on the printed circuit board 11 are pressed against the transducer 10 to complete the electrical circuit.

When the operational amplifier 40 shown in Fig. 1 is turned on but the stylus 20 is not yet in use, a voltage will be applied across the FSR transducer 10 by way of the stylus terminals and conductive electrodes 11. Then, when the tip 4 of the stylus 20 is pressed against the tablet surface 54, the FSR transducer layer 10 is compressed between the surfaces of two opposing parts. The first part is displaceable as the stylus tip 4, which is slightly displaced when pressure is exerted on the stylus tip 4. The other part of the compression mechanism is stationary and is the printed circuit board 11 which is held in place by the housing 2 shown in Fig. 2. When the FSR transducer layer 10 is compressed, its electrical resistance changes such that a current and/or voltage change is produced at the output connected to the operational amplifier 40. This change is used to trigger the pressure detector 42, to acquire the pressure sensing data. Also included within the hollow tip 4 of the stylus 20 of Fig. 2, is the pickup antenna 29 shown in Fig. 1, which is radiatively coupled to the radiating electrodes 56 and 58 of the tablet 54.

In the position detecting branch 26 is the antenna device 29 described in USP 5,117,071 cited above, which picks up electromagnetic signals radiated from the conductors 56 and 58in the electrostatic tablet 54. The output of the antenna 29 is coupled through the amplifier 30 to the signal strength detector 32. The output of the signal strength detector 32 is then applied to the analog-to-digital converter 34. The output to the analog-to-digital converter 34 is a digital representation of the signal strength detected by the antenna 29 for the signals radiated from the conductors 56 and 58 in the electrostatic tablet 54. The signals radiated from the electrostatic tablet 54 represent positional information when detected by the antenna 29, as described in USP 5,686,332, cited above.

The output of the signal strength detector 32 is applied to the analog-digital converter 34, which in turn outputs a digital representation of the relative position of the stylus 20 over the electrostatic tablet 54, as a number to a second input to the multiplexer 36.

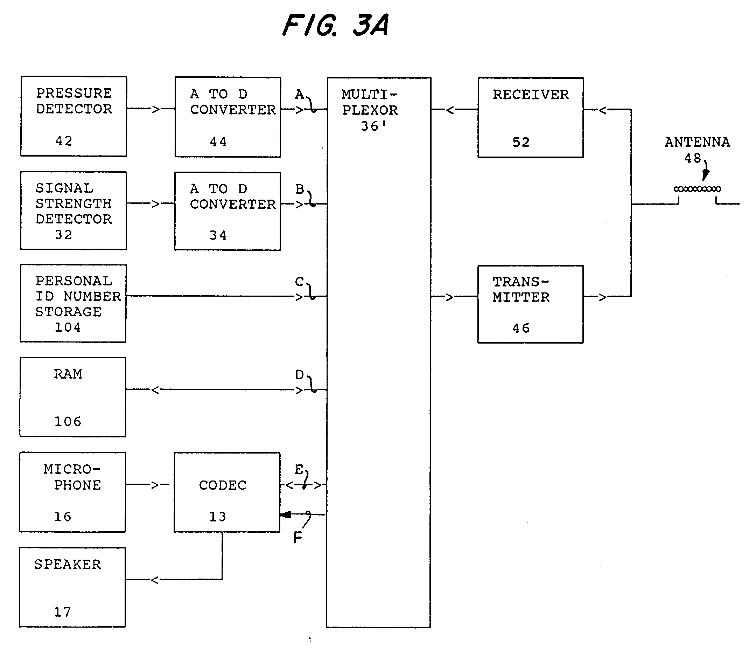

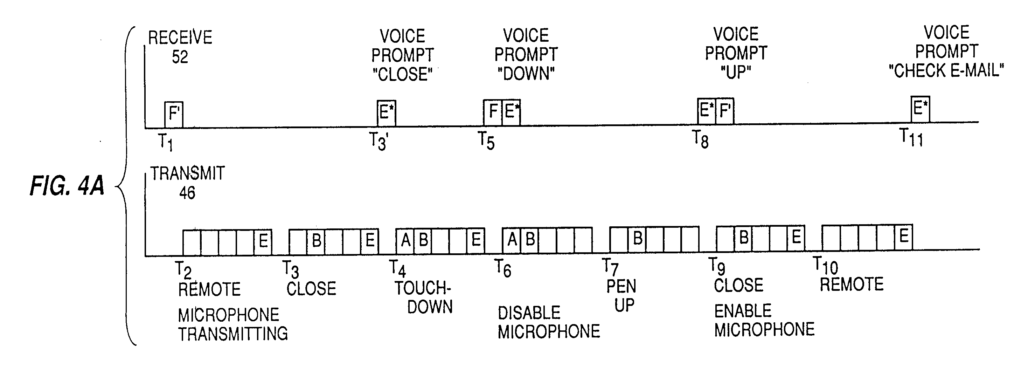

The multiplexer 36 is shown as multiplexer 36' in another schematic diagram in Fig. 3A. There it is seen that the multiplexer 36 or 36' generates a time-divided sequence of numbers in data frames as shown in Fig. 4A, which are applied to the transmitter 46. The multiplexer can be controlled to change the order and content of the data stream. Returning back to Fig. 1, the multiplexed data stream of numbers alternately output from the pressure detector A-to-D converter 44 and the position detecting A-to-D converter 34 are applied to the frequency shift key (FSK) transmitter 46. The output of the transmitter 46 is then applied to the antenna 48 in the stylus 20. The stylus 20 then radiates the information which includes the applied pressure on the pressure detecting mechanism 38 and the X-Y position information from the antenna device 29. This data stream is radiated from the antenna 48 and is detected, in accordance with the invention, by the embedded antenna 62 in the digitizing display 22.

Fig. 3A shows the multiplexer 36' including the inputs A, B, C, D, E and the output F, which can replace the multiplexer 36 in Fig. 1. The multiplexer 36' in Fig. 3A has five input devices connected to it, the pressure detector 42, the signal strength detector 32, the personal identification number storage 104, the RAM 106 and the microphone 16 and speaker 17 through the CODEC 13. The pressure detector 42 transfers the applied pressure signal input from the tip 4 of stylus 20 to the analog-to-digital converter 44, which outputs a digital representation of the applied pressure on input A to the multiplexer 36'. The signal strength detector 32 receives X-Y related position information and Z separation information from the antenna 29 and applies it to the analog-to-digital converter 34. The converter 34 outputs a digital representation of the X-Y position and Z separation over the input B to the multiplexer 36'. The personal identification number storage 104 can be a read-only storage or a writable EPROM which outputs an identifying digital number on the input C to the multiplexer 36'. The RAM 106 can store information which is output as digital information to the input D to the multiplexer 36'.

Fig 3A also shows the microphone 16 and speaker 17 connected through the CODEC 13 to the multiplexer 36'. The CODEC 13 can be the pulse code modulation or delta modulation type encoder and decoder which converts analog signals such as voice signals into a sampled and digitized stream of binary bits. Examples of in the prior art of suitable CODEC 13 is shown in USP 4,208,740 to H. B. Yin, et al. entitled "Adaptive Delta Modulation System," assigned to the IBM Corporation and incorporated herein by reference. Other suitable CODEC devices are described for example in USP 4,059,800 by Gardner Jones, Jr., entitled "Digital Multi-Line Companded Delta Modulator," assigned to the IBM Corporation and incorporated herein by referenced. The CODEC 13 will sample the analog signal from the microphone 16 and digitize the samples into a digitized stream of binary information which is a digitized replica of the original analog signal, and output over line E. It can be pulse code modulated or delta modulated. Correspondingly, digitized voice information can be received over line E from the multiplexer 36' by the CODEC 13 and converted into an analog waveform representing the original speech message. The resulting analog signal is transferred from the CODEC to the speaker 17 for presentation as an audio signal.

Fig. 2 shows that the end 18 opposite to the end 38 of the stylus 20, has perforations therethrough to allow the sound of the user's voice to pass unimpeded to the microphone 16 and the audio signal from the speaker 17 to pass unimpeded out of the stylus 20.

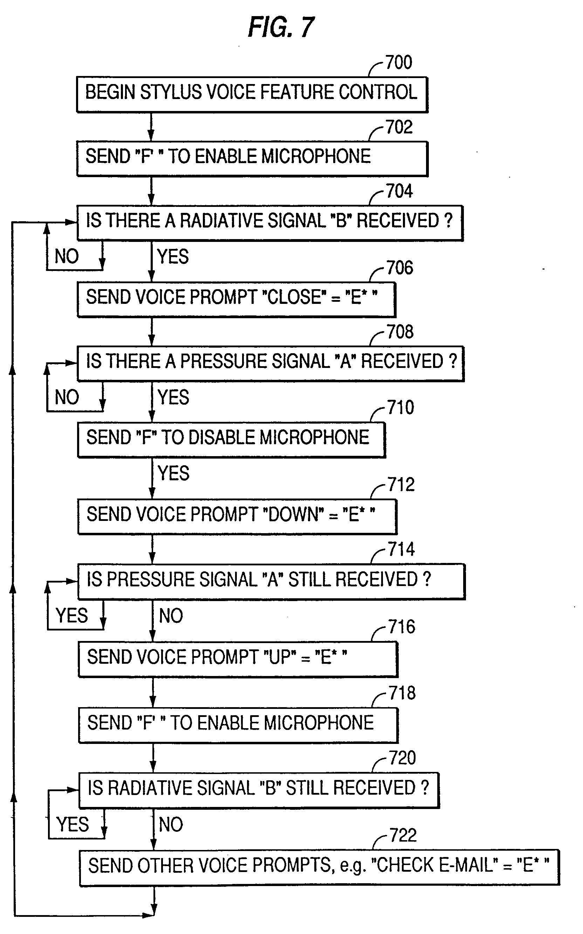

Reference can be made to Fig. 4A in conjunction with the block diagram of Fig. 3A to illustrate the operation of the invention in its preferred embodiment. Reference can also be made to the flow diagram of Fig. 7 for the sequence of operational steps which are carried out by the pen-based computer system 74. In Fig. 4A, the receiver 52 receives the ' signal at time T1 from the pen-based computer system and in particular from the antenna 62. Reference to Fig. 7 will show that in step 700, this begins the stylus voice feature control.

In step 702, the pen-based computer system sends the F' signal to enable microphone operation. The F and F' signals are transferred from the receiver 52 through the multiplexer 36' to the CODEC 13, selectively enabling encoding of the analog waveform from the microphone 16 into a sampled and digitized waveform which will then be passed over the line E and output to the multiplexer 36'. F and F' are complementary, binary signals. F' turns the microphone on and F turns the microphone off. Turning to Fig. 4A, at the later time T2, the stylus 20 is at a remote location with respect to the tablet 54, sufficiently far away that the signal strength detector 32 does not detect any electromagnetic signal radiated from the tablet 54. This can be seen by the packet at T2 in Fig. 4A, which does not have any signal B which would indicate the receipt at the stylus of a radiative pickup signal from the tablet 54. The packet at T2 does include a voice signal E which has been output from the CODEC 13 through the multiplexer 36' and is output through the transmitter 46 and the antenna 48. This can be an example of the user using the stylus as a personal microphone at a position remote from the tablet 54, to communicate through the computer system 74 to the LAN.

In Fig. 7, this corresponds to step 704 which determines whether there is a radiative signal B received, and if there is not, then the flow loops at step 704. In Fig. 4A, at the later time T3, the packet depicted shows that in addition to a voice signal E being transmitted by the transmitter 46, there is a radiative signal B output from the signal strength detector 32. This corresponds to the user having brought the stylus 20 into a relatively close position with respect to the electrostatic tablet 54, so that a radiative signal emitted by the tablet 54, will be picked up by the detector 32. This condition is shown in the flow diagram of Fig. 7, where step 704 determines that there is a radiative signal B received. The flow diagram of Fig. 7 then flows to step 706 where the pen-based computer system 74 can optionally send a voice prompt E* which is shown at time T3' in Fig. 4A. The voice prompt at time T3' can for example, be the voiced message "close," which can be transmitted from the pen-based computer system 74 over the antenna 62 and received at the receiver 52 of the stylus, where it is passed through the multiplexer 36' to the CODEC 13 over line E. The CODEC 13 will receive the digitized voice signal and will decode it, producing the analog waveform of the voice message, which is output to the speaker 17. The flow diagram in Fig. 7 then passes to step 708 which determines whether there is a pressure signal A received. At this stage since there is no pressure signal A, the step 708 remains in a loop at that step.

In Fig. 4A, at the later time T4, the packet contains both a voice signal E, a signal strength detector signal B, and a pressure signal A. The pressure signal A indicates that there has been a mechanical touchdown of the tip 4 of the stylus 20 on the surface of the digitizing display 54. In the flow diagram of Fig. 7, step 708 determines that there has been a pressure signal A received by the pen-based computer system 74. The flow of Fig. 7 then goes to step 710 which sends a F signal to the stylus 20 to disable the microphone. This function is initiated to decouple the microphone from the transmitter 46 in the stylus 20, in order to avoid picking up the spurious acoustic noise from the stylus tip 4 as it is rubbed against the surface of the tablet 54. Reference to Fig. 4A will show that at the time T5, the receiver 52 receives the signal F and this signal will be passed through the multiplexer 36' and over the line F to control the CODEC 13 to stop encoding the analog output from the microphone 16. Fig. 7 also shows the flow passing to step 712 which optionally has the pen-based computer system 74 send a voice prompt E* over the antenna 62 to the stylus 20. In step 712, an example voice prompt would be the voiced word "down," which can prompt the user that an actual mechanical contact has been detected between the tip 4 for the stylus and the digitizing display 54. Transmitter 46 passes the E* signal through the multiplexer 36' and over the E line to the CODEC 13 where it is decoded and the analog waveform representing the voiced word "down" is passed to the speaker 17 for acoustical presentation by the stylus. The flow diagram of Fig. 7 then passes to step 714 which determines if the pressure signal A is still received, and in this stage of the example it is still received. Therefore, step 714 loops to itself.

In Fig. 4A, at the later time T6, the packet shows that there is no longer any E voice signal being transmitted from the microphone 16 to the pen-based computer system 74. At the later time T7 in Fig. 4A, the packet shows that there is no longer a pressure signal A represented in the packet. This would correspond to the user having raised the pen tip 4 from mechanical contact with the surface of the digitizing display 54. In the flow diagram of Fig. 7, step 714 determines that the pressure signal A is no longer being received. Therefore, the process flows to step 716 which optionally sends a voice prompt E* from the pen-based computer system 74 to the stylus 20. In this example, the voice prompt in step 716 is the voiced word "up," which can indicate to the user that mechanical contact is no longer occurring between the tip 4 and the surface of the digitizing display 54. Fig. 7 also shows the flow to the next step 718 which has the pen-based computer system 74 sending the F' signal to enable the microphone. The F' signal is transmitted from the antenna 62 to the antenna 48 of the stylus 20, and is received at the receiver 52 and passed through the multiplexer 36' and passes over the F line to the CODEC 13. The CODEC 13 is then controlled to encode any analog waveform received from the microphone 16, by sampling the waveform and digitizing the waveform and then passing the digitized stream over the line E to the multiplexer 36'. This function is performed since now the tip 4 is no longer in mechanical contact with the surface of the digitizing display 54, and therefore there is no longer a concern for the pickup of acoustic noise. The flow diagram of Fig. 7 then flows to step 720 which determines if the radiative signal B is still being received. At this stage of the example, it is still being received and therefore step 720 goes into a loop with itself. Reference can be made to Fig. 4A which shows that at time T8, the receiver 52 has received the voice prompt E* and it has also received the signal F' to enable the microphone.

Reference to Fig. 4A shows that at time T9, the stylus is still close enough to the digitizing display 54 to pick up the radiative signal from the display 54, and therefore the signal B is included in the packet. Fig. 4A shows at time T10, that the stylus has been removed far enough away from the digitizing display 54, so that it can no longer detect the radiative signal with the signal strength detector 32. This can be seen by the absence from the packet of the signal B.

In Fig. 7, the flow diagram shows that in step 720, it is determined that the radiative signal B is no longer received. Therefore, the flow proceeds to step 722 which can now handle other voice prompts. An example voice prompt can be in association with a background communications program running in the pen-based computer system 74, which is an electronic mail or E-mail application. If electronic mail has been received at the pen-based computer system 74, from elsewhere in the LAN network, the voice prompt E* with the message "check E-mail," can be transmitted from the antenna 62 to the stylus 20 for presentation by the speaker 17. This is shown in Fig. 4A at the time T11. Then, Fig. 7 shows the flow proceeding back to step 704, which determines whether a radiative signal B has been received. The flow diagram will remain in a state of step 704 until the stylus 20 is brought into close enough proximity to the digitizing display 54, so that its radiative signal can be picked up by the radiative pickup antenna 29.

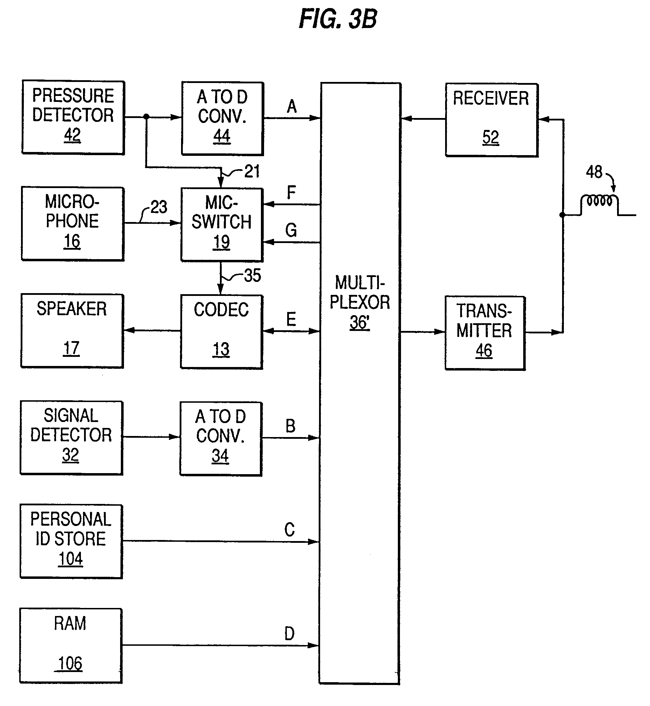

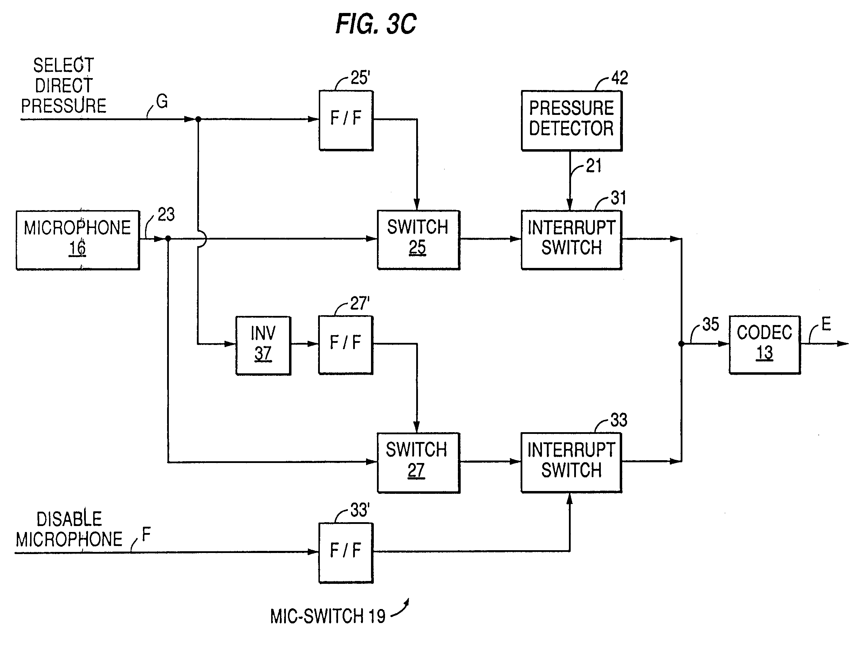

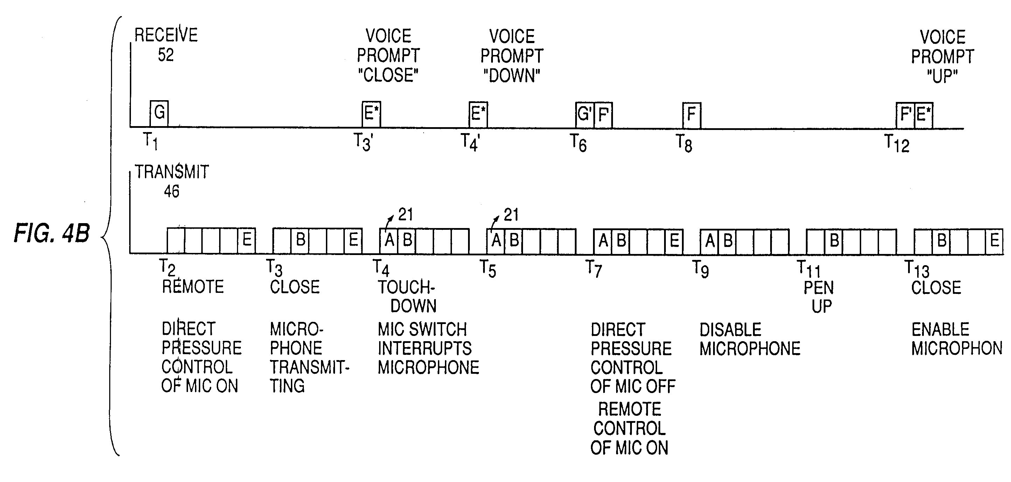

An alternate embodiment invention of the invention is shown in Figs. 3B, 3C and 4B. In the alternate embodiment of the invention, in addition to the remote control of the microphone by means of the transmission of the signals F and F' from the pen-based computer system 74 to the stylus 20, an additional feature can be the direct control by the pressure detector 42 or alternately by the signal detector 32 of a microphone switch 19 which selectively couples the microphone 16 to the multiplexer 36'. A detailed logic diagram of the microphone switch 19 is shown in Fig. 3C. The microphone switch 19 has the same F line connecting to it as was described above. An additional line G is a control line from the multiplexer 36' to the microphone switch 19. The control line G selects the direct control by the pressure detector 42 of the microphone switch 19. If the G signal is received by the microphone switch 19, when the pressure detector 42 outputs a contact detection signal on line 21, it actuates the interrupt switch 31 which prevents the microphone 16 from transmitting its signal to the CODEC 13. Alternately, if the signal G' which is the complement of G, is input to the microphone switch 19, then the interrupt switch 33 is effective in applying the disabled microphone signal F received from the pen-based computer system 74, in remotely controlling whether the microphone 16 is operatively coupled to the CODEC 13 as previously described.

Additional details as to the operation of the microphone switch 19 can be seen with reference to Fig. 3C. If the select-direct-pressure signal G is applied to the microphone switch 19, the flip-flop 25' is set which turns on the switch 25 connecting the microphone 16 over line 23 to the interrupt switch 31. Correspondingly, the signal G is inverted in the inverter 37 and its complement G' is applied to the flip-flop 27' which disables the switch 27 connecting the output of the microphone 16 over line 23 to the interrupt switch 33. In this state, with the switch 25 selected, if no contact signal is received over line 21 from the pressure detector 42, then the interrupt switch 31, maintains the connection between the switch 25 and the CODEC 13 over line 35. Thus, any signal from the microphone 16 over line 23 is passed through the switch 25 and the interrupt switch 31 to the CODEC 13. If the pressure detector 42 outputs a contact signal over line 21 to the interrupt switch 31, the connection between the switch 25 and the CODEC 13 is interrupted. Thus, a direct control by the pressure detector 42 is obtained over the connection of the microphone 16 to the CODEC 13. Thus, as soon as the tip 4 of the stylus 20 is in mechanical contact with the digitizing display 54, the signal from the microphone 16 is interrupted and not permitted to reach the CODEC 13. This prevents the pickup of acoustic noise from the tip 4 as it rubs across the surface of the digitizing tablet 54.

Alternately, if the pen-based system 74 sends a complement signal G' to the stylus 20, then Fig. 3C shows that the flip-flop 25' is switched to its opposite state which disables the switch 25. Correspondingly, the inverter 37 inverts the signal G' into the true signal G which sets the flip-flop 27' so as to enable the switch 27. Switch 27 can then connect the microphone 16 to the interrupt switch 33. Now, if the signal F' (the complement of F) which is an enable microphone signal is received from the pen-based computer 74 to the stylus 20, the interrupt switch continues to maintain the connection between the switch 27 and the CODEC 13. Thus, the microphone 16 is enabled to transmit its waveform over line 23 through the switch 27 and the interrupt switch 33 to the CODEC 13. When the disable microphone signal F is received at the flip-flop 33', it switches the interrupt switch 33 so as to interrupt between the switch 27 and the CODEC 13. This operation is under remote control of the pen-based computer system 74. In this condition, the microphone 16 is no longer able to transmit its waveform through the interrupt switch 33.

Reference to Fig. 4B will illustrate the operation of this second embodiment of the invention. The select-direct-pressure signal G is received at time T1 by the receiver 52. At the later time T2, a packet is transmitted over the transmitter 46 which includes a microphone output E. This would correspond to a remote position of the stylus. The stylus in this stage is under direct pressure control with the microphone on. At the later time T3, with the stylus being brought closer to the digitizing display, the radiative signal B is included in the packet. At the later time T3', the voice prompt "close" can be received at the stylus. At the later time T4, the packet shows that a touchdown has occurred with the A signal present in the packet. In accordance with the second embodiment of the invention as shown in Figs. 3B and 3C, the presence of the A signal shows that the pressure detector 42 has output a signal over line 21 indicating contact, to the interrupt switch 31. The interrupt switch 31 then interrupts the path between the switch 25 and the CODEC 13. Reference to Fig. 4B shows that the packet at time T4 does not have a E signal from the microphone 16. The pressure detector 42 has been effective in interrupting the microphone 16 operation as the stylus tip 4 comes into mechanical contact with the surface of the digitizing display 54. Fig. 4B also shows that the voice prompt "down" can be transmitted from the pen-based computer system to the stylus 20. The later time T5 shows that the interrupted microphone operation continues. At the later time T6, the receiver 52 receives the complement G' signal which deselects the direct-pressure-control of the microphone switch 19, applying the alternate control by the pen-based computer system 74. This is followed at time T6 by a receipt of the F' signal from the pen-based computer system 74, which insures that the interrupt switch 33 connects the switch 27 to the CODEC 13 so that any signal from the microphone 16 will reach the CODEC 13. Reference to Fig. 4B shows at time T7, there is a microphone signal E in the packet. At the later time T8, a F signal is received which disables the microphone. This signal is received from pen-based computer system 74. Reference to Fig. 4B shows that at the later time T9, the packet no longer has a microphone signal E in it. This is because the interrupt switch 33 has been set by remote control, to interrupt the path between the switch 27 and the CODEC 13. Then in Fig. 4B, the later time T11 shows the absence of a pressure signal A, which indicates that the pen tip 4 has been raised from the surface of the digitizing display 54. However, now that the microphone operation is under the control of the pen-based computer system 74, the pen-based computer system 74 must receive the packet transmitted by the transmitter 46 at time T11, before it can respond with any program initiated change in the operating status of the microphone 16. Fig. 4B shows that at the later time T12, a signal F' is received by the receiver 52, which enables the microphone 16, by reconnecting the interrupt switch 33 between the switch 27 and the CODEC 13. Optionally, a voice prompt E* can also be transmitted to the stylus at time T12. Then at the later time T13, Fig. 4B shows that there is now a microphone signal E in the packet.

Thus it is seen that in the second embodiment of the invention shown in Figs. 3B, 3C and 4B, both remote control by the pen-based computer system 74 and local control by the pressure detector 42 can be alternately used to control the connection of the microphone 16 to the CODEC 13.

Speech data output from the microphone 16 and received at the pen-based computer system 74, can be converted into operational data and control information by a suitable voice recognition program in system 74, such as that described in copending U. S. patent application serial number 07/968,097, filed October 29, 1992 by V. Stanford, et al. entitled "Method for Word Spotting on Continuous Speech," assigned to IBM Corporation and incorporated herein by reference.

The digitizing display 22 can be, for example, a transparent overlay superimposed on a conventional display monitor or a workpad coupled to a pen-based computer system. Included in the overlay, for example, can be the embedded antenna 62. Alternately, the antenna 62 can be proximate to the transparent overlay, but sufficiently close to enable detection of the multiplexed data stream transmitted from the antenna 48 of the stylus 20.

In accordance with the invention, the stylus 20 transmits by means of the antenna 48 information from the pressure detector 38 and the X-Y detector 29 to the antenna 62 in the digitizing display 22. Antenna 62 in the digitizing display 22, is coupled through the amplifier 64 to the FSK receiver 66. The output of the receiver 66 is then applied to a microprocessor 68. The microprocessor 68 can, for example, strip out the respective numbers representing the contact pressure detected by the detector 38 in the stylus 20 and separately, the number representing the X-Y position location of the stylus with respect to the electrostatic tablet 54. The numerical values can then be forwarded by the microprocessor 8 to the pen-based computing system 74.

Further in accordance with the invention, the stylus 20 can include a transmit/receive switch 50 which alternately connects the antenna 48 to either the FSK transmitter 46 or alternately to the FSK receiver 52 in the stylus 20. If the receiver 52 is connected to the antenna 48, the the stylus 20 can receive information in the form of electromagnetic signals radiated from the antenna 62 in the digitising display 22. In this mode of operation, the FSK transmitter 70 transfers digital information from the microprocessor 68 to the amplifier 72, which applies the digital information over the antenna 62 of the digitizing display 22. The radiated electromagnetic signals from the antenna 62 containing the digital information from the microprocessor 68, is radiated to the antenna 48 in the stylus 20. The antenna 48 is then connected through the transmit/receive switch 50 to the FSK receiver 52, which applies the received digital information from the digitizing display 22 to the multiplexer 36. The multiplexer 36 will then apply the digital information to for example a storage device 76 in the stylus 20 or the RAM 106 in Fig. 3A. In this manner, digital information can be transmitted from the digitizing display 22 and received and stored in the stylus 20.

The side cross-sectional view of the stylus 20 shown in Fig. 2 provides a detailed illustration of the mechanical parts of the pressure contacting portion 38. The stylus 20 is designed to precisely determine when the tip 4 is in mechanical contact with the electrostatic tablet 54 and when it is not in mechanical contact. However, the tip contacting portion 38 can also output several intermediate states of pressure. For example, the contact portion 38 of the stylus 20 can output 16 levels represented by four binary bits of pressure. The 16 levels of pressure can be used for applications such as shading of drawings, moving a cursor fast or slow, drawing heavy or light lines, and other drawing applications. The construction of the stylus 20 shown in Fig. 2 enables very small longitudinal displacement of the probe tip 4 within the housing 2 to detect a range of force from 30 grams to 300 grams. The stylus 20 can use a transducing material such as the force sensing resistor made by Interlink, described above.

The design of the contact portion 38 shown in Fig. 2 eliminates friction which would prevent the detection of low pressure. It also allows the stylus to relax back to its non-contact state, to avoid confusing readings when detecting the tip 4 is just coming off the surface of the display 54. The design shown in Fig. 2 also provides a very low pre-load pressure on the force sensing resistor 10 so that the dynamic range of the force sensing resistor 10 is maximized. In addition, the design of the contact portion 38 in Fig. 2 minimizes the detection of lateral rather than axial or longitudinal forces.

The tip 4 of Fig. 2 floats freely between the cone 3 and a brass shaft which holds the ball of the electrostatic sensor 29, as described in the above referenced USP 5,117,071. Bushings 8 and 9 are made of tetrafluoroethylene to minimize friction.

The gasket 6 is made of very low durometer rubber to establish a minimum amount of pre-load pressure. Without some pre-load pressure, the tip 4 will move around inside the cone 3 and create false readings as the stylus 20 is moved, rotated, shaken or tilted. However, if the gasket 6 is too stiff, this will reduce the sensitivity of the stylus to the detection of low forces and reduce the dynamic range of the stylus.

The tip 4 detects axial forces, along the line of the axis of the housing 2. The pen tip 4 contains the electrostatic sensing element 29 used for X-Y position determination, as is described in USP 5,117,071. The force sensing resistor 11 is the type used in membrane switch devices. The force sensing resistor 11 meets with a small circular printed circuit board 10 which is used to make appropriate contact with the force sensing resistor 11.

The force sensing resistor 11 generates a variable resistance which depends on the pressure applied to it by the tip. The force sensing resistor 11 can be biased by a reference voltage source for example 1.4 volts, so that a differential voltage across the device can be amplified by the operational amplifier 40. The output voltage can be adjusted to match the output voltage for the range of X-Y positioning of the amplifier 30 for the electrostatic pickup device 29. In this way, a common analog-to-digital conversion circuit could be used to digitize both the pressure output by the pressure detector 42 and the signal strength output by the signal strength detector 32 in Fig. 1. In such an alternate embodiment, appropriate switching between the pressure detector 42 and the signal detector 32 with the single analog-to-digital converter could be accomplished to perform an analog multiplexing of the analog signal input to the common analog-to-digital converter. Item 8 in Fig. 2 is a bushing to maintain the tip 4 in concentric alignment with the cone 3 attached to the tubing 2 of the stylus 20. The separator 5 shown in Fig. 2 can be used to separate the pressure detecting electronics 42 from the signal strength detecting electronics 32 in the stylus 20.

In another embodiment of the invention, the storage device 76 can be a read-only storage such as 104 in Fig. 3A, which stores a personal identification number or a password or other security information, which can be transmitted from the stylus 20 to the digitizing display 22, for processing in the pen-based computer 74, to validate the stylus or the user of the stylus.

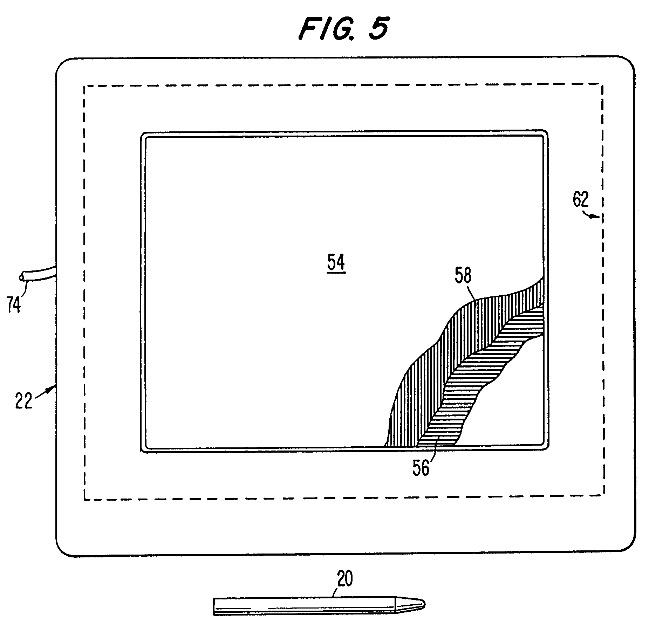

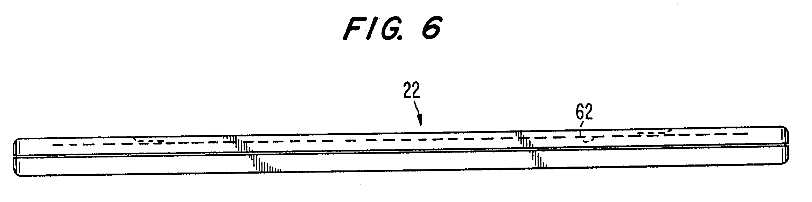

Fig. 5 shows a more detailed view of the workpad embodiment of the digitizing display 22 and the associated pickup stylus 20. Fig. 6 is a side view of the workpad 22. Fig. 5 and Fig. 6 show the relative location of the embedded antenna 62 within the housing of the workpad 22. It can be seen how the electrostatic tablet 54 with its horizontal and vertical conductors 56 and 58 are positioned in relation to the antenna 62. The wire 74 connects the workpad 22 to the pen-based computing system.

Thus it is seen that the invention provides an improved voice communication feature incorporated into an untethered personal stylus for a digitizing display. The microphone 16 in the stylus can provide speech data to the pen-based computer system 74, which can be recognized by suitable voice recognition programs, to produce operational data and control information to the application programs running in the computer system. This can be combined with tip location data received from the stylus. In response, the pen-based computer system 74 can transmit voice messages back to the speaker 17 in the stylus, providing voice prompts to the user. The invention thus provides for multimedia communication between the user and the system.

Although specific embodiments of the invention have been disclosed, it will be understood by those having skill in the art that changes can be made to those specific embodiments without departing from the spirit and the scope of the invention.

## Claims

1. In a data processing system, a multimedia stylus (20) for a digitizing display, comprising:
a multiplexer (36) in said stylus, having an input coupled to a receiver for receiving data from said data processing system, and having an output coupled to a transmitter, for transmitting data to said data processing system;
a position detector (38) in said stylus, coupled to an input of said multiplexer, for generating a position indicating signal from said digitizing display and in response, said multiplexer transmitting a first signal through said transmitter to said data processing system;
a microphone (16) in said stylus, coupled to an input of said multiplexer, for converting an input audio signal of a first audio message into a second signal transmitted by said multiplexer through said transmitter to said data processing system;
said data processing system sending to said receiver in said stylus third signal, in response to said first signal;
a speaker (17) in said stylus coupled to an output of said multiplexer, for receiving said third signal representing a second audio message and producing an output audio signal in response to said first signal.

2. In a data processing system, a multimedia stylus for a digitizing display, comprising:
a multiplexer in said stylus, having an input coupled to a receiver in said stylus for receiving data from said data processing system, and having an output coupled to a transmitter in said stylus for transmitting data to said data processing system;
a radiative pickup antenna in said stylus, coupled to an input of said multiplexer, for receiving position indicating electromagnetic signals from said digitizing display and in response, said multiplexer transmitting first signals through said transmitter to said data processing system;
said data processing system receiving said first signals and in response thereto, sending to said receiver in said stylus second signals representing a first audio message;
a speaker in said stylus, coupled to an output of said multiplexer, for receiving said second signals and producing an output audio signal of said first audio message.

3. The system of claim 2, which further comprises:
a microphone in said stylus, coupled through a switch means to an input of said multiplexer, for converting an input audio signal of a second audio message into third signals;
said data processing system sending to said receiver in said stylus fourth signals, for controlling said switch means;
said switch means selectively coupling said microphone to said transmitter through said multiplexer in response to said fourth signals;
whereby said microphone is selectively coupled to said transmitter in response to said position indicating electromagnetic signals received by said radiative pickup antenna.

4. The system of claim 2, which further comprises:
a mechanical contact sensor in said stylus, coupled to an input of said multiplexer, for generating contract indicating signals and in response, said multiplexer
transmitting third signals through said transmitter to said data processing system;
said data processing system receiving said third signals and in response thereto, sending to said receiver in said stylus fourth signals representing a second audio message;
said speaker in said stylus receiving said fourth signals and producing a second output audio signal of said second audio message.

5. The system of claim 4, which further comprises:
a microphone in said stylus, coupled through a switch means to an input of said multiplexer, for converting an input audio signal of a third audio message into fifth signals;
said data processing system sending to said receiver in said stylus sixth signals, for controlling said switch means;
said switch means selectively coupling said microphone to said transmitter through said multiplexer in response to said sixth signals;
whereby said microphone is selectively coupled to said transmitter in response to said contact indicating signals generated by said mechanical contact sensor.

6. The system of claim 4, which further comprises:
a microphone in said stylus, coupled through a switch means to an input of said multiplexer, for converting an input audio message into fifth signals;
said switch means having a control input coupled to said mechanical contact sensor, for selectively coupling said microphone to said transmitter through said multiplexer in response to said contact indicating signals.

7. In a data processing system, a multimedia stylus for a digitizing display, comprising:
a multiplexer in said stylus, having an input coupled to a receiver for receiving data from said data processing system, and having an output coupled to a transmitter, for transmitting data to said data processing system;
a position detector in said stylus, coupled to an input of said multiplexer, for generating a position indicating signal from said digitizing display and in response, said multiplexer transmitting a first signal through said transmitter to said data processing system;
an audio means in said stylus coupled to an output of said multiplexer, for receiving a second signal from said receiver;
said data processing system receiving said first signal and in response thereto, sending said receiver said second signal.

8. The system of claim 7, which further comprises:
said audio means is a speaker in said stylus, for receiving said second signal representing an audio message and producing an output audio signal in response to said position sensing signals.

9. The system of claim 7, which further comprises:
said audio means is a microphone in said stylus, coupled through a switch means to an input of said multiplexer, said switch means being coupled to an output of said multiplexer, for selectively converting an input audio signal into a third signal;
said switch means selectively coupling said microphone to said transmitter through said multiplexer in response to said second signal.

10. In a data processing system, a multimedia stylus for a digitizing display, comprising:
a multiplexer in said stylus, having an input coupled to a receiver for receiving data from said data processing system, and having an output coupled to a transmitter, for transmitting data to said data processing system;
a position detector in said stylus, coupled to an input of said multiplexer, for generating a position indicating signal from said digitizing display and in response, said multiplexer transmitting a first signal through said transmitter to said data processing system;
a microphone in said stylus, coupled through a switch means to an input of said multiplexer, said switch means having a control input coupled to said position detector, for selectively transmitting an audio signal through said multiplexer and transmitter to said data processing system;
said switch means selectively coupling said microphone to said transmitter through said multiplexer in response to said position indicating signal from said position detector.

11. The system according to any one of the above claims, wherein
said position detector is a radiative pickup antenna in said stylus, for receiving a position indicating electromagnetic signal from said digitizing display and in response, outputting said first signal.

12. The system according to any one of the above claims, wherein
said position detector is a mechanical contact sensor in said stylus, for generating a contact indicating signal from mechanically contacting said digitizing display and in response, outputting said first signal.
